# EUROPEAN PATENT SPECIFICATION

(11) **EP 2 670 508 B1**
(45) Date of publication and mention of the grant of the patent: **25.08.2021**
(21) Application number: 12706351.9
(22) Date of filing: 24.01.2012
(51) Int. Cl.: B01D 46/40

(54) **POROUS METAL BODY OF SINTERED METAL POWDERS AND METAL FIBERS**
METALLISCHER PORÖSEN KÖRPER AUS GESINTERTEN METALLPULVERN UND METALLFASERN
CORPS MÉTALLIQUE POREUX EN POUDRES MÉTALLIQUES FRITTÉES ET FIBRES MÉTALLIQUES

(30) Priority: 04.02.2011 US 201161439581 P
(43) Date of publication of application: 11.12.2013
(73) Proprietor: Entegris, Inc., Billerica, MA 01821 (US)
(72) Inventor: ZELLER, Robert, S., Boston, MA 02118 (US)
(74) Representative: Greaves Brewster LLP
(86) International application number: PCT/US2012/022360
(87) International publication number: WO 2012/106149

(56) References cited:
- EP-A1- 0 057 848
- EP-A2- 0 457 611
- WO-A1-99/03559
- None

## Description

### RELATED APPLICATIONS

This application claims the benefit of U.S. Provisional Application No. 61/439,581, filed on February 4, 2011.

### BACKGROUND OF THE INVENTION

The performance of gas filtration media made of metal is largely dependent on the raw materials used. Particle removal efficiency in gases is a function of the total internal surface area of the material. Therefore, materials best suited are those which have large surface area to volume ratios. Smaller, irregular shaped metal particles or fibers are best suited for making gas filtration media. Current high efficiency all metal gas filters are generally of 2 categories. The first are those made from fine metal powders, generally less than 20 microns and often 1 micron to 3 microns. An example is the Entegris "Wafergard® III" line of gas filters or the Mott "Gas Shield®" line of filters. The second are filters made from small diameter metal fibers- fibers with diameters of 5 micron or less. Examples of this are the Pall "Gaskleen®" line of filters and Mott "Defender" filters.

Generally speaking, the filters made from powders have a lower permeability than those made from fibers due to the powder metallurgy process employed to make them. It is difficult to fabricate a solid state porous matrix of low enough density to ensure high permeability using powders. On the other hand, solid state materials from fibers can be fabricated using non-woven techniques producing very low density materials with high permeability. The porous materials made from powder metals tend to be stronger structures and the porous materials made from fiberous material tend to have a relatively weaker structure.

In general, high efficiency gas filtration material which employ powders are made using tradition powder metal processes: a powder is poured into a mold, the mold is compressed to form a coherent, yet fragile, "green form" and this green form is sintered to from solid bonds between the discreet metal particles. This process is simple, straight forward and widely practiced.

Fibers do not suit themselves to powder metal processes due primarily to large electrostatic forces causing extensive interlocking of the fibers and "clumping." They do not "flow" like powders. Molds cannot be filled uniformly without the aid of charge-reducing agents and compression is problematic. Complex geometries are not possible. Typically, media is limited to flat sheet mats which are formed by the deposition of the fibers with water or air laying, processes commonly used to create non-woven fabrics. These can then be sintered to form bonds between the discrete fibers.

Patent Abstracts of Japan, JP 06-277422, discloses a method for producing a filter medium that allows metal fibers 11 and metal powder 12 to be dispersed and afloat in a liquid, then form a mixed product consisting of a blend of the metal fibers 11 and the metal powder 12 after the sedimentation of the blend in a liquid with the subsequent sintering of the mixed product. According to this application, when the mixture settles, the metal powder settles faster than the metal fibers. Because the metal fibers 11 and the metal powder 12 are mixed uniformly when suspended in the liquid, a very uniform mixture can be maintained at least parallel to the plane of accumulation after the fibers and powder have settled on the drainboard 5. Further according to this disclosure, there is some change in the mixture ratio of the mixture in the direction of thickness, as shown in FIG. 2 of JP 06-277422. The method disclosed is complicated and requires a vat with a jetting plate, a drainboard, and requires removal of jetting plate after suspension of metal fibers and metal particles in the liquid. A method to form complicated filter structures such as tubes is not disclosed.

Patent Abstracts of Japan, JP 05-245317, discloses a filter or catalyst body for removing harmful constituents from the waste gas of an internal combustion engine, especially a diesel engine, that is provided with at least one fabric layer of metal wires or metal fibers. A sintering material in the form of powder, granules, fiber fragments or fiber chips is introduced into the meshes and is sintered on to the wires or fibers. The fabric is formed in the form of a twilled wire fabric, and the sintering material 4 is introduced into the meshes 5 and is sintered together with the wires or fibers 2, 3. The structure disclosed contains segregated regions of sintered powder and regions of fiber and powder.

Patent Abstracts of Japan, JP2010-142785, discloses a filter assembly 1 that is constituted of a metallic porous body, has at least two or more cylindrical filter bodies 2 having an optional length in the axial direction, arranged to be apart from each other in a base member 3 and is enveloped by a housing container 5, wherein the metallic filter body 2 comprises a cylindrical body having a non-circular shaped cross-sectional surface and having a flat surface 6 in which a part of an external line drawing the profile is flattened in the width dimension (LI) of 5-48% of the whole circumferential length (LO) and the flat surface 6 and the flat surface 6 of the other cylindrical filter body 2 are oppositely arranged with a prescribed interval (S). In the filter assembly 1, the filter body is provided with a plurality of projections on the outer circumferential surface and includes one in which a part of a virtual average line made by connecting points of (1/2H) average height of the projections forms the flat surface. The metallic filter body is formed of a layered sintered porous body comprising stainless steel fiber and/or stainless steel powdery material. The disclosed metallic filter has a layered structure.

U.S. Pat. No. 7,329,311 Zeller et al. disclose a composite material wherein powdered nanoparticle materials making up the composite may have diameters less than about 1000 nanometers. Like the porous base materials, these nanoparticle materials may be metals, metal alloys, ceramics, thermoplastics, or mixtures of these materials. The starting nanoparticles penetrate into the porous base material, and may have shapes including but not limited to spheres, dendrites, fibers, or mixtures of these particles. The disclosed composite has a porous base material and powdered sintered nanoparticle material that penetrates the pores of the base.

Kostornov, et al., Powder Metallurgy and Metal Ceramics, vol. 22, No. 4, 288-290 (Translated from Poroshkovaya Metallurgiya, No. 4(244), pp. 53-56, April, 1983) discloses sintering wet mixed PNK-1 carbonyl nickel powder, nickel fibers made by chopping 50 micron wire, and a volatile pore forming agent ammonium bicarbonate of 0.08 to 0.125 micron size. Nickel fibers in amounts ranging from 25% to 75% were added to the carbonyl nickel powder and pore forming agent ammonium bicarbonate by the wet mixing. The structure of the sintered composite is not described and complex membrane structures are not disclosed.

Tumilovich et al., Powder Metallurgy and Metal Ceramics, vol. 31, No.3, 239-242 (Translated from Poroshkovaya Metallurgiya, No. 3, pp. 56-60, March, 1992) discloses sintering copper powders 63 to 100 microns with copper fiber 50 micron by 3700 micron with the amount of fiber varying from 0 to 100% utilizing a wet mix technique with glycerine. To avoid failure of the specimens, the glycerine was removed since it decomposed at 290 °C. The pore size of the sintered product varied from about 15 microns to 50 microns with fiber content of 0 to 50%. A tomogram of a sample of material with 20% fiber appears to show fibers separate from powder and does not show particles acting as nodes for fibers in the sintered product.

U.S. Pat. No. 7,445,853 discloses a layered filter structure, the first layer includes a porous metal layer and the second layer includes a self-supporting layer of sintered short metal fibers. The first and the second layer are sintered together. The second layer may include in addition to the short metal fibers, other metal particles such as long metal fibers or metal powder particles or a combination of short metal fibers and metal powder particles. This documents discloses that a second layer can have between 20 and 80% short metal fibers and between 20 and 80% metal powder particles. Porosity of the second layer may range between 50% and 85%. This material does not have a uniform distribution of particles and fibers throughout its mass and the formation of complex membrane structures is not disclosed.

EP 0 057 848 A1 discloses a metallic sintered body which is composed of fine metallic particles, which are a mixture of a metal powder and a stainless steel fibrous powder in a ratio of 20 : 80 to 80 : 20 by weight. The fine metallic particles are compacted with a thermosetting resin at a temperature of 50° to 250°C.under a pressure and the resulting compact is sintered at a temperature of 800° to 1,200°C.

### SUMMARY OF THE INVENTION

Versions of the invention include a porous sintered body that is an isotropic composition of metal particles and metal fibers sintered together that has a porous structure. The metal particles in the composition are nodes that are sintered to portions of one or more metal fibers in the porous sintered body; the metal fibers are sintered to portions of one or more other metal fibers throughout the porous sintered body. The average pore size of the isotropic composition is 10 microns or less.

The isotropic composition can be formed into porous sheet membranes or may be formed into complex shapes such as, but not limited to, porous tube shaped porous membranes or thimble shaped porous membranes. These porous membranes can be characterized by having opposing surfaces have the same distribution of metal particles and metal fibers. The porous sintered body can be used as a filter element or a diffuser and may be joined to a housing.

In some versions of the composition, the metal particles are partially melted and fused to the fibers.

In versions of the invention the air permeability of the porous sintered body is greater than 1.7 standard liters per minute of air per square centimeter of area of porous sintered body at a pressure differential of 96.52 kPa (14 pounds per square inch) and an LRV of the sample porous sintered body is greater than 6 LRV as determined when several million particles with a size distribution centered around 0.014 microns as an aerosol is used to challenge the porous sintered body.

### BRIEF DESCRIPTION OF THE DRAWINGS

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.
FIG. 1A shows 1.5 micron stainless steel (SS) fibers in raw state.
FIG. 1B shows a raw stainless steel (SS) powder.
FIG. 2 shows a fiber powder mix.
FIG. 3A is an SEM of sintered flowable blend of metal particles and metal fibers.
FIG. 3B is a scanning electron micrograph of a porous sintered body illustrating metal particles fused to the fibers and acting as nodes in the porous structure.
FIG. 4 is a permeability comparison showing pressure required for airflow through SS powder tube vs fiber/powder tube.
FIG. 5 is a comparison of LRV values of fiber/powder vs powder only (LRV at approximately 2 slpm/cm²).
FIG. 6 is another view of the cross section of the isotropic porous sintered body (porous sintered membrane) shown in FIG. 3A.

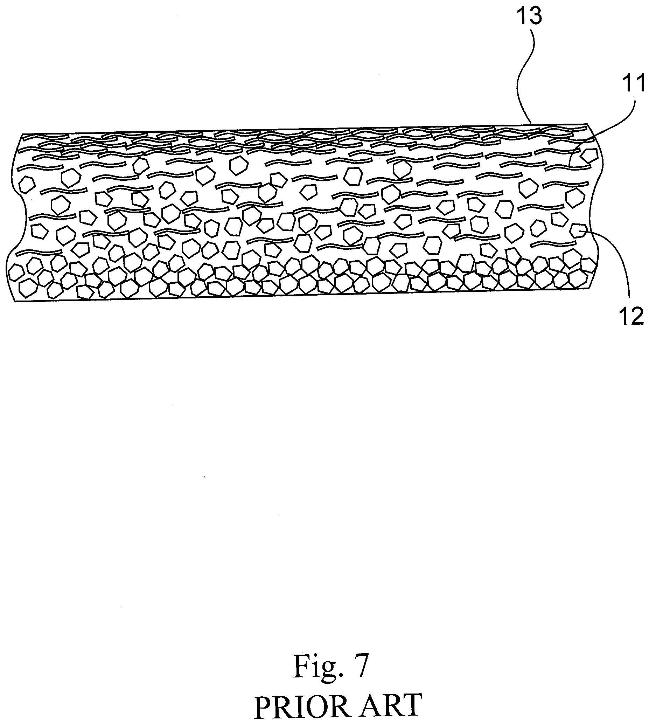

FIG. 7 (PRIOR ART) shows a filter medium 13 illustrating metal fibers 11 that are oriented in a parallel relationship with a surface of the filter. In this filter element the mixture of metal powders 12 and fibers is more uniform parallel to the plane of accumulation while a change in the mixture ratio of powder and fibers is shown in the direction of thickness; the filter medium is non-isotropic (drawn from JP 06-277422, Figure 2).

### DETAILED DESCRIPTION OF THE INVENTION

While various compositions and methods are described, it is to be understood that this invention is not limited to the particular molecules, compositions, designs, methodologies or protocols described, as these may vary. It is also to be understood that the terminology used in the description is for the purpose of describing the particular versions or embodiments only, and is not intended to limit the scope of the present invention which will be limited only by the appended claims.

It must also be noted that as used herein and in the appended claims, the singular forms "a", "an", and "the" include plural reference unless the context clearly dictates otherwise. Thus, for example, reference to a "fiber" is a reference to one or more fibers and equivalents thereof known to those skilled in the art, and so forth. Unless defined otherwise, all technical and scientific terms used herein have the same meanings as commonly understood by one of ordinary skill in the art. "Optional" or "optionally" means that the subsequently described event or circumstance may or may not occur, and that the description includes instances where the event occurs and instances where it does not.

Although the invention has been shown and described with respect to one or more implementations, equivalent alterations and modifications will occur to others skilled in the art based upon a reading and understanding of this specification and the annexed drawings. The invention includes all such modifications and alterations and is limited only by the scope of the following claims. In addition, while a particular feature or aspect of the invention may have been disclosed with respect to only one of several implementations, such feature or aspect may be combined with one or more other features or aspects of the other implementations as may be desired and advantageous for any given or particular application. Furthermore, to the extent that the terms "includes", "having", "has", "with", or variants thereof are used in either the detailed description or the claims, such terms are intended to be inclusive in a manner similar to the term "comprising." Also, the term "exemplary" is merely meant to mean an example, rather than the best. It is also to be appreciated that features, layers and/or elements depicted herein are illustrated with particular dimensions and/or orientations relative to one another for purposes of simplicity and ease of understanding, and that the actual dimensions and/or orientations may differ substantially from that illustrated herein.

The problem that porous metal gas filters generally offer high particle retention, but suffer from one or more of the following; low permeability, low strength, or an inability to easily fabricate more complex geometries, is overcome by sintering a compacted green form of an isotropic distribution of micron sized metal fibers and micron sized metal powders. The resulting porous sintered body of particles and fibers has an isotropic distribution of particle nodes sintered to the fibers throughout the sintered body. The porous sintered body has high particle retention efficiency (greater than 6 log retention value (LRV)), high gas permeability (similar to a sintered body of fibers only), and has high strength (13789.5 kPa (2000 pounds per square inch)), or more, oil burst pressure for a clay particle plugged sample). The porous sintered body can be made in both simple sheet form and more complex shapes like tubes and can be used for particle filtration in various fluids (gases, liquids, supercritical fluids) or as a diffuser for gases in a chamber.

One advantage of an isotropic distribution of particles and fibers sintered together in a porous body is that it provides uniform mechanical strength, uniform permeability, and uniform particle retention throughout the porous sintered body. An isotropic distribution of particles and fibers in the porous sintered body also provides uniform surface for bonding the porous sintered body into a housing for a filter or a diffuser. Another advantage of the isotropic distribution of particles and fibers in the porous sintered body is that in addition to sheets formed of the material, complex shaped sintered bodies can be prepared. For example complex shaped porous sintered bodies include, but are not limited to, thimble shaped gasket filters, tubular filters, and other shaped filter elements. These shaped elements can be made by pressing the particles and fibers into a green form that can be handled, and then sintering the green form to make the final product.

Versions of the invention may also be characterized as an isotropic composite that is a sintered mixture of metal fibers and metal particles throughout the mass of the porous sintered body. The isotropic composite exhibits properties with the same average value when measured along axes of a sample of the porous sintered body in all directions. For example, the average pore size, density, or porosity in a sample of a porous sintered body is the same in all directions. The average pore size may be determined by SEM analysis of sections of a sample; the density may also be determined on sections of a sample.

Air laid distribution of powder particles and fibers results in a mass that is an isotropic distribution of particles and fibers that can be pressed into a complex green form shape that can be handled and that can be sintered. The air laid distribution of powder particles and fibers results in an isotropic distribution of particles and fibers in the porous sintered body where powder particles are nodes that are sintered to portions of one or more fibers, and fibers are sintered to portions of one or more other fibers and particles throughout the porous sintered body.

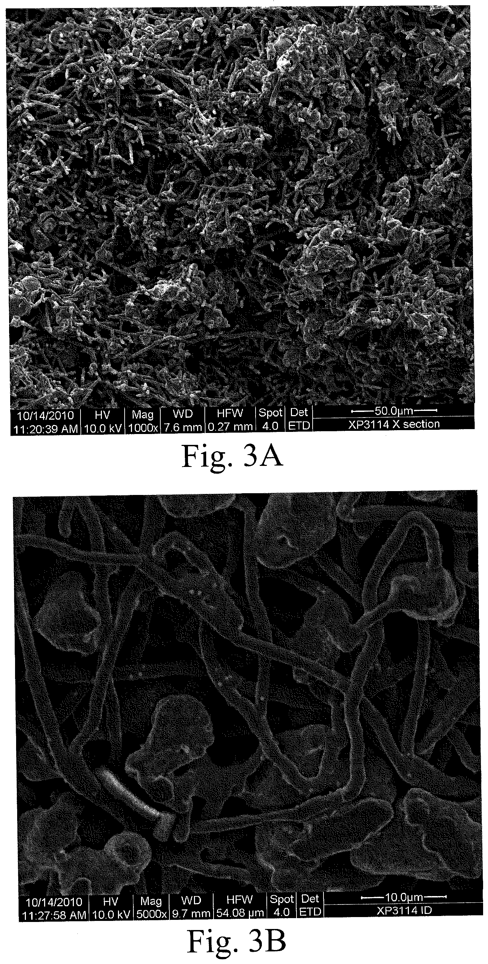

The distribution of particles and fibers throughout a porous sintered body in versions of the invention can be characterized by sectioning a porous sintered body and determining the area of particle nodes or counting the number of particle nodes in an area of a micrograph of the sample, see for example FIG. 3A and FIG. 3B. A "isotropic distribution" of particles and fibers is an area of the particle nodes or the number of particle nodes in a first region of the membrane that is within ±25% of the area of particle nodes or the number of particle nodes in another region of the membrane. In some versions of the invention, the isotropic distribution of particles and fibers in the porous bodies of the invention is such that the area of the particle nodes or the number of particle nodes in a first region of the membrane is within ±10% of the area of particle nodes or the number of particle nodes in another region of the membrane.

According to the invention a porous sintered body comprises an isotropic distribution of metal particles and metal fibers sintered together in a porous structure, the metal particles can act as nodes that are sintered to portions of one or more metal fibers, and the metal fibers can be sintered to portions of one or more other metal fibers throughout the porous sintered body. The metal particles are nodes and are fused to the fibers in the porous body.

Another version of the invention is a porous sintered body comprising a compressed flowable mixture of metal particles and metal fibers that is a self supporting green compact, the self supporting green compact can be sintered to form a porous sintered body, the metal particles are nodes that are sintered to portions of one or more metal fibers, and the metal fibers are sintered to portions of one or more other metal fibers throughout the porous sintered body.

One version of the invention is a high-porosity membrane filter comprising a membrane element formed by sintering an isotropic flowable mass of metal fibers and metal particles and forming a isotropic matrix of substantially interconnected pores within the membrane filter element, the porosity of the membrane filter element is between 45% and 65%. The invention can further include a filter housing defining a fluid conduit, the housing comprising a casing for retaining the membrane filter element in the fluid conduit, the casing has an anterior and a posterior with the porous membrane filter element being located therebetween and being sealably joined to the casing, the housing thereby defining a filtered fluid flow path.

Log reduction value (LRV) is defined as the log of the ratio of two numbers and can be used to characterize the particle retention properties of a porous membrane. In the present case, the ratio is that of the number of particles impacting the filter membrane element on the upstream side of the filter, to the number of particles detected downstream of the filter. Therefore, an LRV value of 7 would imply a challenge of 10⁷ particles and the detection of 1 particle downstream, the log of this ratio being 7. The test is conducted by generating an aerosol containing several million particles with a size distribution centered around 0.014 microns, passing this aerosol through the filter made from the porous sintered body in versions of the invention and counting the number of particles that pass using a condensation nucleus counter (CNC). In versions of the porous sintered body, the LRV is greater than 6 when several million particles with a size distribution centered around 0.014 microns as an aerosol is used to challenge the porous sintered body. In some other versions the LRV of the porous sintered body is between 6 and 9 when several million particles with a size distribution centered around 0.014 microns as an aerosol is used to challenge the porous sintered body. In still other versions of the porous sintered body, the LRV of the porous sintered body is between 7 and 9 when several million particles with a size distribution centered around 0.014 microns as an aerosol is used to challenge the porous sintered body.

The average pore size of the isotropic composition of sintered metal fibers and metal powders is according to the invention 10 microns or less. The pore size can be determined by bubble point method with a fluid such as water or isopropyl alcohol. The pores of the body are filled with the fluid and then subject to gas pressure until the surface tension is overcome and the gas begins to flow through the body. The pressure at which the surface tension in the pores in overcome is the bubble point pressure. Alternatively the pore size can be determined from an average of largest pore dimensions or size measured on scanning electron micrographs of samples of the material, see for example FIG. 3B. In one version of the invention the average pore size is about 10 microns or less and the amount of fiber in the isotropic composition is 40 percent by weight or about 40 percent by weight. The pore size of the porous sintered body is found by both methods to be less than 10 microns.

The porosity of the porous sintered body in versions of the invention can be or is at least 55%; in some versions the porosity ranges from 50% to 75% .

The permeability of the porous sintered body in versions of the invention can be characterized as being greater than 1.7 standard liters per minute of air per square centimeter of area at a pressure differential of 96.52 kPa (14 pounds per square inch) for a 0.28 centimeter thick sample. In some versions of the invention the permeability of the porous sintered body in versions of the invention can range from than 1.7 standard liters per minute of air per square centimeter of geometric body area at a pressure differential of 96.52 kPa (14 pounds per square inch) to 3.5, or more, standard liters per minute of air per square centimeter of geometric body area at a pressure differential of 96.52 kPa (14 pounds per square inch) for a 0.28 centimeter thick sample.

Metal particles and metal fibers are sintered together to form the porous sintered body in versions of the invention. In some versions of the invention the metal can be nickel, or stainless steel.

The size of the metal particles can be those used to form porous metal filters. In some versions of the invention the metal particles have a size where the largest aspect of the metal particles is in the range of 10 microns to 100 microns. In some versions of the invention the metal particles have a largest aspect of 15 to 25 microns. The size of the metal fibers can be those used to form porous metal filters. In some versions of the invention the fibers have a diameter in the range of between 1 micron and 20 microns; in some versions of the invention the fibers have a diameter between 1 micron and 5 microns. The length to diameter ratio of the metal fibers (L/d) can range from between 25 and 125. In some versions of the porous sintered body, the powder has an average diameter or largest size aspect of 17 microns to 20 microns while the fibers have an average diameter of 1 micron to 2 microns.

The density of the porous sintered body can range from between greater than the density of a porous body made from sintered fibers to less than or equal to the density of a porous body made from sintered powder only. In some versions of the invention the density of the porous sintered body can range from 1.8 grams per cubic centimeter to 3.4 grams per cubic centimeter.

The strength of the porous sintered body of sintered metal particles and metal fibers in versions of the invention can be within 10%, or less, of the bust pressure for a metal filter element made from the sintered powder only. In some versions of the invention the porous sintered body has a burst pressure of 15168.47 (2,200 pounds per square inch), or greater, for a tube with a 0.32 centimeter wall thickness and a diameter of 1.55 centimeters. The strength of a sample can be characterized by the burst pressure for the sample, the burst pressure can be measured by blocking the pores with a fine clay dust and pressurizing with oil until the sample bursts and recording the pressure at burst.

Distribution of powder and fiber is characterized by a powder that "absorbs" or "dissipates" much of the electrostatic energy or charge on the surface of the fibers in the mixture of powders and fibers and enables the mix to form a composition that is able to "flow." However, it is the fibers which enable high permeabilities so the blends used in versions of the invention are those with the maximum percentage of fibers possible while still maintaining flowability of the mixture.

A flowable mixture of powder and fiber that is suitable for making a porous sintered body in versions of the invention can be determined by pouring a mixture of metal powder and metal fibers into a funnel with a 1.27 cm (1/2") diameter outlet. The funnel is tapped, and if the mixture readily passed through the funnel, the mixture is considered to be a flowable mixture suitable for making a porous sintered body in versions of the invention.

In versions of the invention the air laid density of the metal powder and metal fibers mixtures is in an intermediate range between the air laid density of the fibers only and the air laid density of the powders only. In some versions of the invention, the air laid density of a fiber and powder blend that can be used to make green compacts can be in the range of 0.75 grams/cubic centimeter to 0.85 grams per cubic centimeter. In one version an air laid mixture of 40% stainless steel fiber and 60% stainless steel powder with a density in the range of 0.75 grams per cubic centimeter to 0.85 grams per cubic centimeter can be used to make a porous sintered body. This air laid density for the particle and fiber mixture enables to compaction of the material into green forms or green compacts also of low density.

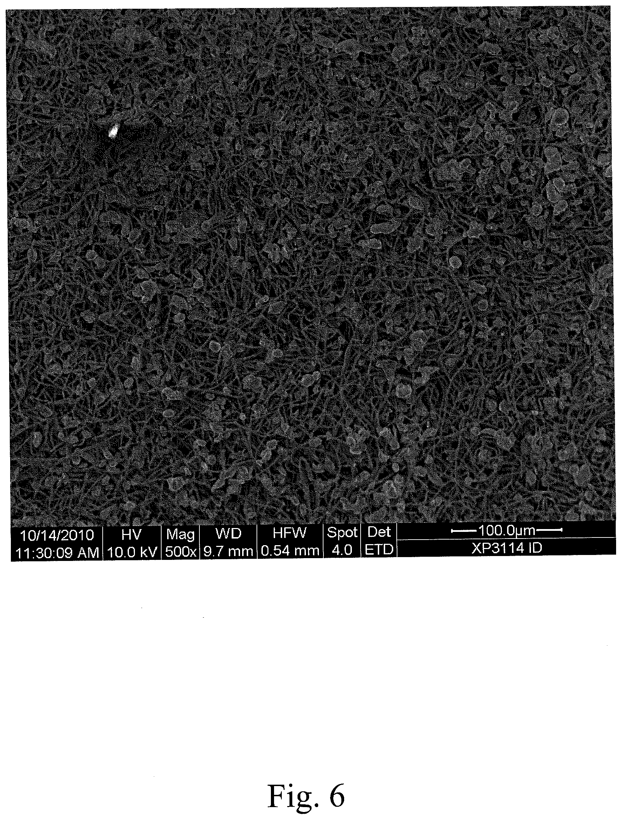

The combination of the powders with the fibers allows for increased strength of the composite material while retaining high permeability, the powders can act as nodes to which the fibers bond during sintering (as seen in FIG. 3A and FIG. 3B). FIG. 6 is another view of the cross section of the isotropic porous sintered body (porous sintered membrane) shown in FIG. 3A. This image further illustrates the structure of the porous sintered body in a version of the present invention where the metal particles act as nodes that sinter bond one or more fibers together, where the fibers are sintered to portions of other fibers, and where the fibers and particles are isotropically mixed throughout the porous sintered body. The fibers are not parallel to each other in this isotropic structure.

The sintererd porous bodies of the present invention combine both fibers and powders to produce a porous solid state material that has good permeability, high efficiency and high strength. By blending specific ratios of powders and fibers, a powder-like material that is flowable is formed which behaves like both a fiber and a powder. This enables the use of common and simple powder metal processes (fill mold, press and sinter), but produces a porous sintered body material which has a higher permeability than powder alone is capable of. One advantage of the powder is that it dissipates or "absorbs" much of the electrostatic charge or energy on the surface of the fibers and enables the mix to "flow." However, it is the fibers which enable high permeabilities so a blend with the maximum percentage of fibers possible while still maintaining flowability is desired. The flowable mixture of metal powder particles and metal fiber provide porous sintered bodies that can be made in both simple sheet form and more complex shapes like tubes and the porous sintered bodies can be used for particles filtration in various fluids (gases, liquids, supercritical fluids). The porous sintered body material can be used as a diffuser for gases in a chamber similar to those disclosed in U.S. Pat. No. 5,908,662 (Fu) and U.S. Pat. Application Publication No. 20090183630 (Vroman et al.).

### Example 1: Determining fiber/powder blend percentages

An experiment was undertaken where fibers and powders were blended with different mass percentages and the ability of the blend to flow was determined. The fiber used was a 1.5 micron diameter by 50-100 micron long Stainless Steel fiber manufactured by Bekaert Coorporation (1000 Cobb Place Blvd, Bldg 100, Ste 130, Kennesaw GA 30155) under the Brand "Bekipor" ST 316L "Stainless Short Fiber 1.5 um diameter." The powder used was Manufactured by Ametek Speciality Metal Products (Route 519, Eighty Four PA 15330) as "10 micron" AMETIP Processed Polymer Filter Powders (316L SS). This powder has an average diameter of 17-20 micron while the fibers have an average diameter of 1.5 micron.

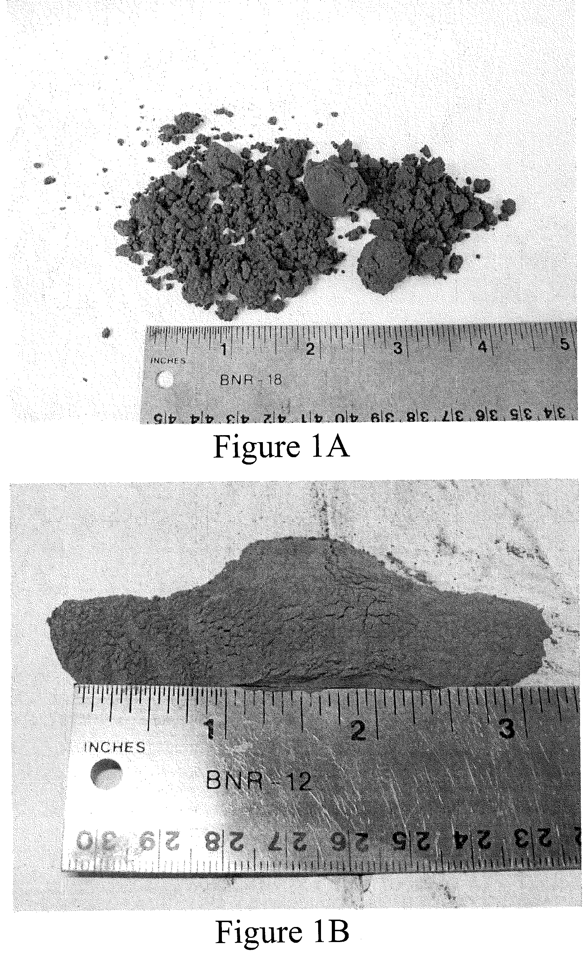

The density of each material is measured. Density measurements of the fiber is problematic due to severe clumping (see FIG. 1A) resulting in a wide density range. For purposes of the experiment the fibers where broken up by "grating" through a screen and allowed to fall into a mold of known volume, a technique know as "air laying." The density measured is called the "air laid" density. Using a #20 mesh size screen, the air-laid density of the fibers was measured to be approximately 0.17 g/cc. Using the same technique for the SS powder (which easily flowed through the screen and needed no "grating," the air-laid density was determined to be approximately 2.9 c/cc. The SS powder has the appearance of fine sand and readily flows (see FIG. 1B).

The flowability was determined by blending mass percentages of the powder and fiber in a grinding device (like that used to grind coffee beans) The mixture was then placed in a container and mixed with mild shaking. It was then poured into a funnel with a 1.27 cm (1/2") diameter outlet. The funnel was tapped and if the mixture readily passed through the funnel, flowability was determined to be present.

If after the initial blending and mild shaking the mixture readily clumped (as shown in FIG. 1A), flowability was determined to NOT be present.

Table 1 shows the results from these tests. It was determined that percentages by mass greater than 40% of the Bekipor" ST 316L Stainless Short Fiber resulted in a blend with the 10 micron" AMETIP Processed Polymer Filter Powders that would not flow and tended to clump. This is obviously for the two materials tested in this example and would be different for other materials.

**Table 1: Results of flowability testing**

| **% fiber** | **Clumps?** | **Flows?** |
|---|---|---|
| 90 | yes | no |
| 80 | yes | no |
| 70 | yes | no |
| 60 | somewhat | no |
| 50 | not too much | "extreme" tapping |
| 40 | OK | OK |
| 30 | OK | OK |
| 20 | OK | OK |
| 10 | OK | OK |

Table 2 shows the air laid density of fiber/powder blends ranging from 100% fiber by mass to 100% powder by mass.

**Table 2: Air laid density of fiber/powder blends**

| **% fiber** | **Density-g/cc** |
|---|---|
| 100 | 0.18 |
| 60 | 0.525 |
| 40 | 0.82 |
| 30 | 0.96 |
| 20 | 1.32 |
| 10 | 1.9 |
| 0 | 3 |

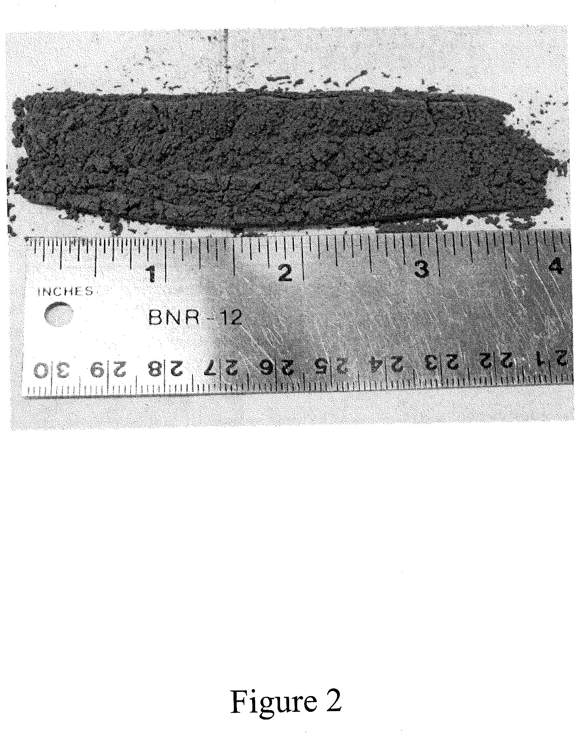

The density of the 40% fiber and 60% powder blend was measured using the air laying technique and found to be in the range of 0.75 g/cc to 0.85 g/cc. This density easily enables to compaction of the material into green forms also of low density. This 40% fiber and 60% powder blend is shown in the image in FIG. 2

### Example 2: Fabrication of porous sintered sheet material

Using the 40% fiber blend determined in Example 1, a mold with a diameter of 7.37 cm and depth of 0.80 cm was filled using air laying techniques previously described. The mold was then compacted at 1360kg (3000 pounds (lbs)) to form a green form disk of 7.37 cm diameter, 0.33 cm thick and a mass of 20.3 g. The green form had a density of 1.37 grams per cubic centimeter (g/cc). The form was sintered at 1085 degrees Centigrade for 15 minutes in Hydrogen. The resulting porous sintered body had a diameter of 7.00 cm, a thickness of 0.28 cm and a density of 1.86 g/cc, and pore size of 10 microns or less. FIG. 3A and FIG. 3B are SEMS of the porous sintered product.

### Example 3: Fabrication of tubular sintererd porous body (a non-limiting example of a complex shaped porous article)

The same blend as used in Example 1 was employed to make a tubular element. The fiber/powder blend was introduced into a tubular mold by pouring into a screen, flowing through a funnel and into the mold. The screen/funnel and mold were constantly being tapped during this filling. The mold has an OD of 2.0 cm, an ID of 1.40 cm, a length of 17 cm and a mass of 38 g. A # 20 screen was used and the apparatus is tapped 1200 times during the filling. The filled and capped mold was then isostatically pressed in water at 34473.8 kPa (5000 psi). The green form was removed from the mold and found to be self supporting and coherent. The resulting green form had an OD of 1.73 cm, and ID of 1.4 cm and a length of 17 cm. The density was 2.75 g/cc. It was sintered at 1095 for 10 minutes in Hydrogen. The resulting porous sintered body had an OD of 1.55 cm, and an ID of 1.23 cm and a length of 15 cm. The density is 3.35 g/cc and pore size of 10 microns or less.

The material fabricated from a blend of fibers and powders is well suited for high efficiency gas filtration. Due to the large surface area of the fibers, as well as the powders, particle efficiencies in excess of 6 Log Reduction Value (LRV) are possible. In addition, the introduction of the powders allows for increased strength of the material, acting as nodes to which the fibers bond during sintering (as seen for example in FIG. 3A and FIG. 3B).

### Example 4: Determination of pore size by Bubble point and SEM

The porous body from Example 3 was saturated with water and air pressure introduced until bubbles were visible on the surface of the boby. Bubbles began to first form at 10 pounds per square inch, indicating a pore size of approximately 2 micron. A SEM such as the one shown in FIG. 3B shows void diameters between the sintered nodes less than 10 micron.

### Example 5: Comparison of Sintered tubes made from Powder and Powder/Fiber Blend

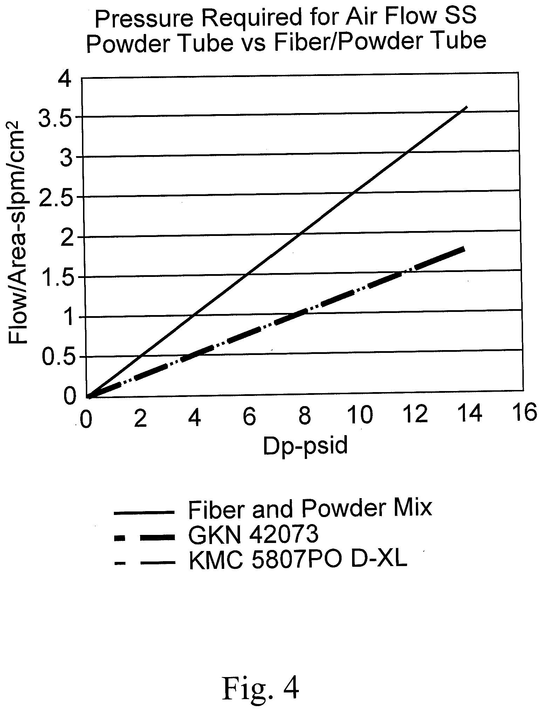

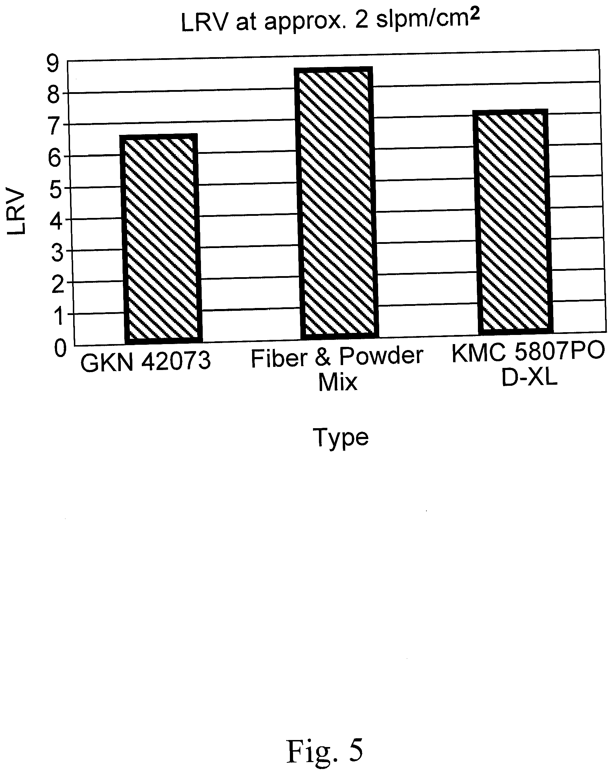

The tube (sintererd porous body) from Example 3 was tested for permeability, particle retention (LRV) and strength. Permeability is simply the measure of pressure required to obtain a specific flow rate. Particle removal efficiency was determined by measuring the concentration of a generated aerosol containing salt particles before the filter and after passing through the filter. FIG. 4 shows a comparison of the permeability of the tube (sintererd porous body) compared to a tubes made from powders alone. All tubes are of SS. The powder only tubes have densities of aproximately 3.4 g/cc, the same as the fiber/powder tube (sintererd porous body). FIG. 4 shows the permeability of the fiber/powder tube (sintererd porous body) is double that of the GKN 42073 (tube used in Entegris WG2M01RR2 "SF mini" gas filter) and the KMC 5807PO D-XL(tube also used in Entegris Gas Filter). In addition, FIG. 5 shows that the LRV value of the fiber/powder tube (sintererd porous body) to be greater than 8 while the GKN 42073 only is slightly greater than 6 and the KMC 5807PO D-XL 7, greater than a 2 order of magnitude increase over the GKN and more than an order of magnitude over the KMC. Those experienced in the art understand that particle retention comes at the expensde of permeability, but with the present invention the opposite has happened.

Finally, the fiber/powder tube (sintererd porous body) from Example 3 was tested for strength by blocking the pores with a fine clay dust and pressurizing with oil until the tube burst. The fiber/powder tube (sintererd porous body) burst at a pressure of 15168.47 kPa (2200 psi), a value very similar to the powder only tube.

The present invention allows for an increase in permeability, and increase in particle retention and equivalent strength for gas filters made from metal fiber and metal powder mixes verses filters made from metal powder only. It also allows for the easy formation of complex geometries that fibers alone cannot be simply fabricated into.

Although the present invention has been described in considerable detail with reference to certain embodiments thereof, other versions are possible. Therefore the spirit and scope of the appended claims should not be limited to the description and the versions contain within this specification.

## Claims

1. A porous sintered body, comprising:an isotropic composition of metal powder particles and metal fibers sintered together having a porous structure, wherein the metal powder particles are nodes sintered to portions of one or more metal fibers in said porous sintered body, and the metal fibers are sintered to portions of one or more other metal fibers throughout the porous sintered body, wherein an isotropic composition of particles and fibers formed as a porous membrane is such, that the area of the particle nodes or the number of particle nodes in a first region of the porous membrane is within ±25% of the area of particle nodes or the number of particle nodes in another region of said porous membrane and further wherein the average pore size of the isotropic composition of sintered metal fibers and metal powders is determined by the bubble point method with a fluid such as water or isopropyl alcohol or from an average of largest pore dimensions or size measured on scanning electron micrographs of samples of the material and is found by both methods to be 10 microns or less.

2. The porous sintered body of claim 1, wherein the area of the nodes or the number of nodes in a first region of the membrane is within ±10% of the area of the nodes or the number of nodes in another region of the membrane.

3. The porous sintered body of any of claims 1 or 2 where the air permeability of the porous sintered body is greater than 1.7 standard liters per minute of air per square centimeter of geometric area of porous sintered body at a pressure differential of 96.52 kPa (14 pounds per square inch) and a Log Reduction Value (LRV) of the porous sintered body is greater than 6 Log Reduction Value (LRV) as determined when several million particles with a size distribution centered around 0.014 microns as an aerosol is used to challenge the porous sintered body.

4. The porous sintered body of claim 3 that has a thickness of 0.28 centimeters and an Log Reduction Value (LRV) of greater than 6 as determined when several million particles with a size distribution centered around 0.014 microns as an aerosol is used to challenge the porous sintered body.

5. The porous sintered body of any one of claims 1-4, wherein the metal fibers have a diameter of 1 to 20 microns.

6. The porous sintered body of claim 5, wherein metal powder particles have a diameter of 17 to 20 microns and the metal fibers have a diameter of 1 to 2 microns.

7. The porous sintered body of any one of claims 1-6, wherein the length to diameter ratio of the metal fibers can range from between 25 to 125.

8. The porous sintered body of any one of claims 1-7, wherein a) a largest aspect of the metal powder particles is 10 to 100 microns; or b) a largest aspect of the metal powder particles is 15 to 25 microns.

9. The porous sintered body of any one of claims 1-8, wherein the body has a porosity of at least 55%.

10. The porous sintered body of any one of claims 1-9, wherein the metal is nickel or stainless steel.

11. A diffuser comprising the porous sintered body of any one of claims 1 to 10.

12. A filter comprising the porous sintered body of any one of claims 1 to 10.

## Patentansprüche

1. Poröser Sinterkörper, eine isotrope, eine poröse Struktur aufweisende Zusammensetzung von zusammen gesinterten Metallpulverpartikeln und Metallfasern umfassend, wobei die Metallpulverpartikel Knoten sind, die an Teile einer oder mehrerer Metallfasern in dem porösen Sinterkörper gesintert sind, und wobei die Metallfasern im gesamten porösen Sinterkörper an Teile einer oder mehrerer anderer Metallfasern gesintert sind, wobei eine isotrope Zusammensetzung von Partikeln und Fasern als poröse Membran derart ausgebildet ist, dass die Fläche der Partikelknoten oder die Anzahl der Partikelknoten in einem ersten Bereich der porösen Membran innerhalb von ±25 % der Fläche der Partikelknoten oder der Anzahl der Partikelknoten in einem anderen Bereich der porösen Membran liegt, und wobei weiter die durchschnittliche Porengröße der isotropen Zusammensetzung von gesinterten Metallfasern und Metallpulvern durch das Blasenpunktverfahren mit einer Flüssigkeit wie Wasser oder Isopropanol oder aus einem Durchschnitt der größten Porenabmessungen oder Porengröße, gemessenen an Rasterelektronenmikroskop-Aufnahmen von Proben des Materials, bestimmt und in beiden Verfahren als 10 Mikrometer oder weniger ermittelt wird.

2. Poröser Sinterkörper nach Anspruch 1, wobei die Fläche der Knoten oder die Anzahl der Knoten in einem ersten Bereich der Membran innerhalb von ±10 % der Fläche der Knoten oder der Anzahl der Knoten in einem anderen Bereich der porösen Membran liegt.

3. Poröser Sinterkörper nach Anspruch 1 oder 2, bei dem die Luftdurchlässigkeit des porösen Sinterkörpers größer ist als 1,7 Standardliter pro Minute Luft pro Quadratzentimeter der geometrischen Fläche des porösen Sinterkörpers bei einer Druckdifferenz von 96,52 kPa (14 Pfund pro Quadratzoll) und ein Bakterienrückhalt (logarithmic reduction value, LRV) des porösen Sinterkörpers größer ist als ein Bakterienrückhalt (LRV) von 6, wie bestimmt, wenn einige Millionen Partikel mit einer Größenverteilung um 0,014 Mikrometer herum als Aerosol verwendet werden, um den porösen Sinterkörper zu testen.

4. Poröser Sinterkörper nach Anspruch 3 mit einer Dicke von 0,28 Zentimetern und einem Bakterienrückhalt (LRV) von größer als 6, wie bestimmt, wenn einige Millionen Partikel mit einer Größenverteilung um 0,014 Mikrometer herum als Aerosol verwendet werden, um den porösen Sinterkörper zu testen.

5. Poröser Sinterkörper nach einem der Ansprüche 1 bis 4, wobei die Metallfasern einen Durchmesser von 1 bis 20 Mikrometern aufweisen.

6. Poröser Sinterkörper nach Anspruch 5, wobei die Metallpulverpartikel einen Durchmesser von 17 bis 20 Mikrometern und die Metallfasern einen Durchmesser von 1 bis 2 Mikrometern aufweisen.

7. Poröser Sinterkörper nach einem der Ansprüche 1 bis 6, wobei das Verhältnis Länge zu Durchmesser der Metallfasern in einem Bereich zwischen 25 und 125 liegen kann.

8. Poröser Sinterkörper nach einem der Ansprüche 1 bis 7, wobei a) ein größter Aspekt der Metallpulverpartikel 10 bis 100 Mikrometer beträgt oder b) ein größter Aspekt der Metallpulverpartikel 15 bis 25 Mikrometer beträgt.

9. Poröser Sinterkörper nach einem der Ansprüche 1 bis 8, wobei der Körper eine Porosität von mindestens 55 % besitzt.

10. Poröser Sinterkörper nach einem der Ansprüche 1 bis 9, wobei das Metall Nickel oder Edelstahl ist.

11. Diffusor, umfassend den porösen Sinterkörper nach einem der Ansprüche 1 bis 10.

12. Filter, umfassend den porösen Sinterkörper nach einem der Ansprüche 1 bis 10.

## Revendications

1. Corps fritté poreux, comprenant : une composition isotrope de particules de poudre métallique et de fibres métalliques frittées ensemble possédant une structure poreuse, lesdites particules de poudre métallique étant des nœuds frittés à des parties d'une ou plusieurs fibres métalliques dans ledit corps fritté poreux, et lesdites fibres métalliques étant frittées à des parties d'une ou plusieurs autres fibres métalliques à travers le corps fritté poreux, une composition isotrope de particules et de fibres formées sous la forme d'une membrane poreuse étant telle, que l'aire des nœuds de particules ou le nombre de nœuds de particules dans une première zone de la membrane poreuse est dans les limites de ±25 % de l'aire des nœuds de particules ou du nombre de nœuds de particules dans une autre zone de ladite membrane poreuse et en outre ladite taille moyenne des pores de la composition isotrope de fibres métalliques frittées et de poudres métalliques étant déterminée par la méthode du point de bulle avec un fluide tel que l'eau ou un alcool isopropylique ou à partir d'une moyenne des dimensions des pores plus grandes ou de la taille mesurée sur des micrographes de microscope électronique à balayage d'échantillons du matériau et étant avérée être, par les deux méthodes, inférieur ou égal à 10 microns.

2. Corps fritté poreux selon la revendication 1, ladite aire des nœuds ou ledit nombre de nœuds dans une première zone de la membrane étant dans les limites de ±10 % de l'aire des nœuds ou du nombre de nœuds dans une autre zone de la membrane.

3. Corps fritté poreux selon l'une quelconque des revendications 1 ou 2, ladite perméabilité à l'air du corps fritté poreux étant supérieure à 1,7 litre standard par minute d'air par centimètre carré d'aire géométrique du corps fritté poreux à une différence de pression de 96,52 kPa (14 livres par pouce carré) et une valeur de réduction logarithmique (LRV) du corps fritté poreux étant supérieure à une valeur de réduction logarithmique (LRV) de 6 telle que déterminée lorsque
plusieurs millions de particules avec une distribution de taille centrée autour de 0,014 microns sous forme d'aérosol sont utilisées pour mette à l'épreuve le corps fritté poreux.

4. Corps fritté poreux selon la revendication 3 qui possède une épaisseur de 0,28 centimètres et une valeur de réduction logarithmique (LRV) supérieure à 6, telle que déterminée lorsque plusieurs millions de particules avec une distribution de taille centrée autour de 0,014 microns sous forme d'aérosol sont utilisées pour mettre à l'épreuve le corps fritté poreux.

5. Corps fritté poreux selon l'une quelconque des revendications 1 à 4, lesdites fibres métalliques possédant un diamètre allant de 1 à 20 microns.

6. Corps fritté poreux selon la revendication 5, lesdites particules de poudre métallique possédant un diamètre allant de 17 à 20 microns et lesdites fibres métalliques possédant un diamètre allant de 1 à 2 microns.

7. Corps fritté poreux selon l'une quelconque des revendications 1 à 6, ledit rapport longueur sur diamètre des fibres métalliques pouvant être compris dans la plage allant de 25 à 125.

8. Corps fritté poreux selon l'une quelconque des revendications 1 à 7, a) la dimension la plus grande des particules de poudre métallique allant de 10 à 100 microns ; ou b) la dimension la plus grande des particules de poudre métallique allant de 15 à 25 microns.

9. Corps fritté poreux selon l'une quelconque des revendications 1 à 8, ledit corps possédant une porosité supérieure ou égale à 55 %.

10. Corps fritté poreux selon l'une quelconque des revendications 1 à 9, ledit métal étant du nickel ou de l'acier inoxydable.

11. Diffuseur comprenant le corps fritté poreux selon l'une quelconque des revendications 1 à 10.

12. Filtre comprenant le corps fritté poreux selon l'une quelconque des revendications 1 à 10.
